# EUROPÄISCHE PATENTSCHRIFT

(11) **EP 3 557 188 B1**
(45) Veröffentlichungstag und Bekanntmachung des Hinweises auf die Patenterteilung: **17.11.2021**
(21) Anmeldenummer: 18167700.6
(22) Anmeldetag: 17.04.2018
(51) Int. Cl.: G01D 5/22, H01F 13/00, H01F 7/00, G01D 5/14

(54) **MAGNETISIERTE KOLBENSTANGE ZUR WEGMESSUNG**
MAGNETIZED PISTON ROD FOR MEASURING DISPLACEMENT
BIELLE MAGNÉTISÉE DESTINÉE À LA MESURE DE COURSE

(43) Veröffentlichungstag der Anmeldung: 23.10.2019
(73) Patentinhaber: NCTE AG, 82041 Oberhaching (DE)
(72) Erfinder: Martin, Antony, 80805 München (DE); Eckschlager, Florian, 85521 Riemerling (DE)
(74) Vertreter: Grünecker Patent- und Rechtsanwälte PartG mbB

(56) Entgegenhaltungen:
- EP-A1- 1 662 232
- DE-A1- 3 437 379
- US-A1- 2004 017 187
- US-A1- 2008 316 669
- US-B1- 6 253 460

## Beschreibung

### Gebiet der Erfindung

Die Erfindung betrifft eine Vorrichtung zur Positionsmessung mit einer magnetisierten Stange und ein Verfahren zur Herstellung der magnetisierten Stange.

### Stand der Technik

Gemäß Stand der Technik gibt es zur Messung der Position von beweglichen Maschinenteilen verschiedene Verfahren, die z.B. auf Widerstandsänderungen bei Potentiometern oder Dehnungsmessstreifen, variabler Induktivität bei einem induktiven Sensor oder variabler Kapazität bei einem kapazitiven Sensor beruhen. Diese Verfahren sind jedoch je nach Anwendungsgebiet nicht ausreichend zuverlässig.

Eine weitere Möglichkeit besteht im Zählen von Pulsen, wie es in einem Inkrementalgeber realisiert ist. Solche Inkrementalgeber mit einer periodischen Maßverkörperung können auf optischen oder magnetischen Messungen beruhen. Nachteilig ist bei solchen magnetisch basierten inkrementellen Weggebern, dass die magnetische Kodierung beispielsweise einer Kolbenstange aufwändig ist.

US 6 253 460 B1 betrifft eine Positionsmessvorrichtung, um beispielsweise translatorische Bewegungen eines Maschinenelements zu messen. US 2004/017187 A1 betrifft einen magnetoresistiven linearen Positionssensor. EP 1 662 232 A1 betrifft einen linearen Positionssensor, der einen Permanentmagneten und einen Magnetfeldsensor aufweist, der ein von der Richtung des Magnetfeldes abhängiges Ausgangssignal erzeugt. US 2008/316669 A1 betrifft ein Verfahren zur Magnetisierung von Objekten. DE 3437379 A1 beschreibt eine Vorrichtung zum Messen einer auf eine Welle ausgeübten Dreh- oder Biegekraft.

### Beschreibung der Erfindung

Der Erfindung liegt die Aufgabe zugrunde, die genannten Nachteile zumindest teilweise auszuräumen.

Diese Aufgabe wird durch eine magnetisierte Stange nach Anspruch 1 gelöst.

Die erfindungsgemäße magnetisierte Stange weist ein außerhalb der Stange messbares Magnetfeld auf, wobei eine radiale Komponente des Magnetfelds der Stange innerhalb eines axialen Bereichs der Stange in Abhängigkeit von der axialen Position einen von Null verschiedenen, konstanten Gradienten aufweist.

Die radiale Komponente des Magnetfeldes ist durch Betrag und Richtung (bzw. Vorzeichen) definiert. Ein von Null verschiedener Gradient (also ein streng monotoner Verlauf der radialen Magnetfeldkomponente in Abhängigkeit von der axialen Position) ist somit auch dann gegeben, wenn z.B. die radiale Komponente an einer axialen Position mit einem bestimmten Betrag (Stärke des Magnetfeldes) radial nach außen zeigt, und sich in axialer Richtung zunächst der Betrag des radialen Magnetfeldes verringert und dann mit einem Nulldurchgang des Betrags eine Richtungsumkehr des Magnetfeldes erfolgt, so dass sich bei weiterem Voranschreiten in axialer Richtung der Betrag des radialen Magnetfeldes wieder erhöht, jedoch die Richtung der radialen Magnetfeldkomponente nach innen zeigt (in Richtung der Achse der Stange).

Durch den konstanten Gradienten besteht ein einfacher linearer Zusammenhang zwischen der radialen Magnetfeldkomponente und der axialen Position.

Erfindungsgemäß kann auf diese Weise eine umkehrbar eindeutige Zuordnung zwischen der radialen Komponente des Magnetfeldes und der axialen Position erfolgen.

Der Betrag der radialen Magnetfeldkomponente in dem axialen Bereich der Stange (und in einem vorbestimmten senkrechten Abstand von der Stange) liegt dabei in einem Bereich, in dem ein Magnetfeldsensor ein mit dem Betrag der radialen Magnetfeldkomponente variierendes Sensorsignal ausgeben kann, also in einem Messbereich eines Magnetfeldsensors.

Die erfindungsgemäße magnetisierte Stange kann dahingehend weitergebildet werden, dass die radiale Magnetfeldkomponente in Abhängigkeit von der Position in Umfangsrichtung um die Stange bei einem konstanten radialen Abstand von der Stange konstant ist. Auf diese Weise kann die magnetisierte Stange unabhängig von der Orientierung in Umfangsrichtung eingesetzt werden.

Die Stange kann beispielsweise eine Vollstange mit einem kreisförmigen Querschnitt oder eine Hohlstange mit einem ringförmigen Querschnitt sein. Weiterhin ist die radiale Komponente des Magnetfelds der Stange vorzugsweise die radiale Komponente des Magnetfelds der Stange in einem vorbestimmten radialen Abstand von der Oberfläche der Stange, und der vorbestimmte radiale Abstand von der Oberfläche ist weniger als der Außendurchmesser der Stange, vorzugsweise weniger als 30% des Außendurchmessers der Stange, höchst vorzugsweise weniger als 10% des Außendurchmessers der Stange, insbesondere weniger als 3% oder 1% des Außendurchmessers der Stange.

Die Erfindung stellt zudem eine Vorrichtung zur Positionsmessung nach Anspruch 4 bereit.

Die erfindungsgemäße Vorrichtung zur Positionsmessung umfasst eine erfindungsgemäße magnetisierte Stange oder eine deren Weiterbildungen; und wenigstens einen Magnetfeldsensor zur Ausgabe eines von der radialen Magnetfeldkomponente abhängenden Signals, wobei der wenigstens eine Magnetfeldsensor und die Stange in axialer Richtung relativ zueinander bewegbar sind. Das ausgegebene Sensorsignal ist somit ein Maß für die axiale Position.

Die erfindungsgemäße Vorrichtung kann gemäß einer Weiterbildung weiterhin umfassen: eine Auswerteeinrichtung zum Empfangen des ausgegebenen Signals und zum Bestimmen einer relativen axialen Position zwischen dem wenigstens einen Magnetfeldsensor oder eines damit gekoppelten Elements und der magnetisierten Stange unter Verwendung des ausgegebenen Signal.

Eine andere Weiterbildung besteht darin, dass jeder Magnetfeldsensor eine elektrische Messspule umfasst, und wobei der wenigstens eine Magnetfeldsensor in einem elektrischen Schwingkreis verschaltet ist. Der Schwingkreis erzeugt ein Messsignal, das proportional zur radialen Magnetfeldkomponente ist. Jede Messspule ist dabei mit ihrer Mittelachse bevorzugt in radialer Richtung angeordnet. Auf diese Weise kann die radiale Magnetfeldkomponente am effektivsten erfasst werden. Die Wirkung der Stärke und Richtung des Magnetfeldes in der Messspule kann beispielsweise darin bestehen, dass sich die Impedanz der Messspule mit der radialen Magnetfeldkomponente ändert, bzw. dass eine zur radialen Magnetfeldkomponente proportionale Phasenverschiebung eines Signals hervorgerufen wird.

Gemäß einer anderen Weiterbildung können zwei Magnetfeldsensoren in Bezug auf die Achse der magnetisierten Stange gegenüberliegend angeordnet sein, insbesondere können vier Magnetfeldsensoren in einem jeweiligen Winkelabstand von 90° in Umfangsrichtung der Stange angeordnet sein. Im Allgemeinen kann eine Anzahl N von Magnetfeldsensoren in einem gleichmäßigen Winkelabstand von 360°/N vorgesehen sein. Der radiale Abstand der einzelnen Magnetfeldsensoren von der magnetisierten Stange ist dabei vorzugsweise für alle Magnetfeldsensoren gleich.

Dies kann dahingehend weitergebildet werden, dass die Magnetfeldsensoren so miteinander verschaltet sind, dass sich die ausgegebenen Signale aufgrund der jeweils gemessenen radialen Magnetfeldkomponenten addieren. Im Falle von Messspulen als Magnetfeldsensoren sind diese so in Reihe geschaltet, dass die erzeugten Signale die gleiche Polarität aufweisen. Wenn die in Reihe geschalteten Messspulen alle die gleiche Wicklungsrichtung (linkssinnig oder rechtssinnig) aufweisen, so ist ein von der Stange abgewandtes Ende einer Messspule mit einem der Stange zugewandten Ende einer anderen Messspule verbunden.

Diese Verschaltung hat zum Einen den Vorteil, dass sich die Stärke des von den Magnetfeldsensoren ausgegebenen Signals erhöht, und zum Anderen wird damit bewirkt, dass der Einfluss von externen Magnetfeldern (Störfeldern) reduziert oder eliminiert wird. Im Beispiel von 2 oder 4 Magnetfeldsensoren hat die in radialer Richtung projizierte Komponente eines konstanten externen Magnetfeldes (z.B. Erdmagnetfeld) an gegenüberliegenden Seiten der Stange ein entgegengesetztes Vorzeichen, was durch die genannte Verschaltung der Magnetfeldsensoren kompensiert wird.

Die Erfindung betrifft ebenfalls die Verwendung einer erfindungsgemäßen magnetisierten Stange oder eine deren Weiterbildungen zur Positionsmessung, wobei wenigstens ein Magnetfeldsensor und die Stange in axialer Richtung relativ zueinander bewegbar sind, wobei von dem wenigstens einen Magnetfeldsensor ein von der radialen Magnetfeldkomponente abhängendes Signal ausgegeben wird und unter Verwendung des ausgegebenen Signals eine relative axiale Position zwischen dem wenigstens einen Magnetfeldsensor oder eines damit gekoppelten Elements und der magnetisierten Stange bestimmt wird.

Die Erfindung stellt ebenfalls ein Verfahren zum Magnetisieren einer magnetisierbaren und elektrischen Strom leitenden Stange gemäß Anspruch 10 bereit.

Das erfindungsgemäße Verfahren zum Magnetisieren einer magnetisierbaren und elektrischen Strom leitenden Stange umfasst die Schritte: Erzeugen eines elektrischen Stromflusses in einer axialen Richtung der Stange; und Erzeugen eines Magnetfeldes in axialer Richtung der Stange. Das Erzeugen des Magnetfeldes in axialer Richtung der Stange und das Erzeugen des elektrischen Stromflusses in axialer Richtung der Stange erfolgt zumindest teilweise gleichzeitig. Auf diese Weise kann die erfindungsgemäße magnetisierte Stange hergestellt werden.

Das erfindungsgemäße Verfahren kann dahingehend weitergebildet werden, dass das Erzeugen des Magnetfeldes in axialer Richtung der Stange durch eine stromdurchflossene Spule, welche die Stange umgibt, bewirkt wird.

Gemäß einer anderen Weiterbildung umfasst das Erzeugen des elektrischen Stromflusses in axialer Richtung der Stange einen gepulsten Stromfluss, insbesondere einen mehrfach gepulsten Stromfluss.

Gemäß einer anderen Weiterbildung umfasst das Erzeugen des elektrischen Stromflusses in axialer Richtung der Stange das Anlegen einer Spannung zwischen einem ersten Endbereich der Stange und einem zweiten, gegenüberliegenden Endbereich der Stange.

Eine andere Weiterbildung besteht darin, dass das Verfahren weiterhin umfasst: teilweises Entmagnetisieren der magnetisierten Stange zum Anpassen eines axialen Gradienten der radialen Magnetfeldkomponente und/oder zum Homogenisieren des Gradienten innerhalb eines axialen Bereichs der Stange.
Die genannten Weiterbildungen können einzeln eingesetzt oder wie beansprucht geeignet miteinander kombiniert werden.

Weitere Merkmale und beispielhafte Ausführungsformen sowie Vorteile der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.

### Kurzbeschreibung der Zeichnungen

- Fig. 1: zeigt eine Ausführungsform der erfindungsgemäßen magnetisierten Stange.
- Fig. 2: zeigt die Magnetisierung einer Stange mit dem erfindungsgemäßen Verfahren.
- Fig. 3: zeigt die Magnetfeldkomponenten während der Magnetisierung der Stange.
- Fig. 4: zeigt eine erfindungsgemäße Vorrichtung zur Positionsmessung.
- Fig. 5: zeigt ein Messsignal der erfindungsgemäßen Vorrichtung.

### Ausführungsformen

Erfindungsgemäß soll die eine Positionsmessung mit einer magnetisierten Stange erfolgen, wobei lediglich die radiale Magnetfeldkomponente erfasst wird. In Zylinderkoordinatensystem (r, ϕ, z) liegt die zentrale Achse der Stange (Symmetrieachse) in z-Richtung, der Radius r wird senkrecht zur z-Achse gemessen, und der Winkel ϕ wird in Umfangsrichtung um die z-Achse in Bezug auf eine vorgegebene Richtung senkrecht zur z-Achse gemessen.

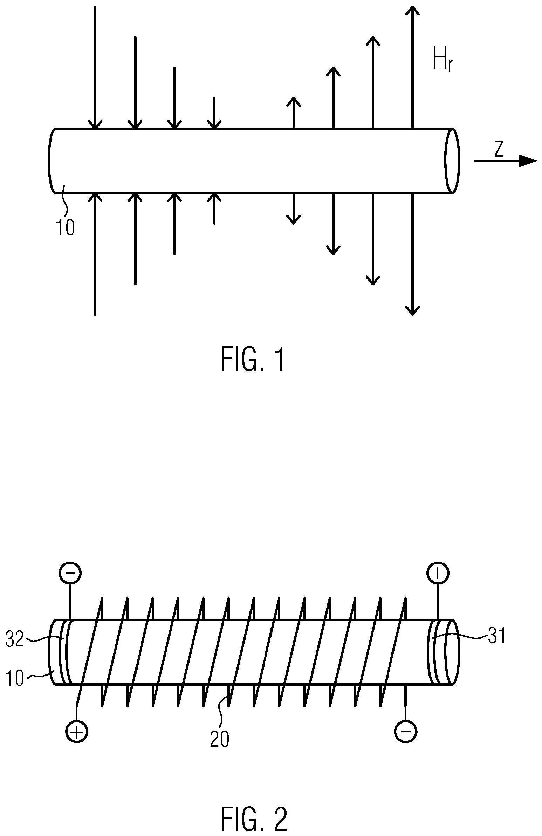

Figur 1 zeigt eine Ausführungsform der erfindungsgemäßen magnetisierten Stange 10, wobei eine radiale Komponente des Magnetfelds der Stange innerhalb eines axialen Bereichs der Stange in Abhängigkeit von der axialen Position streng monoton variiert, insbesondere linear variiert. Mit anderen Worten, eine radiale Komponente des Magnetfelds der Stange (gemessen in r-Richtung) weist innerhalb eines axialen Bereichs der Stange (in z-Richtung) in Abhängigkeit von der axialen Position einen von Null verschiedenen, konstanten Gradienten auf. Dabei ist zu beachten, dass die radiale Magnetfeldkomponente nach außen (von der Stange weg) oder nach innen (zur Stange hin) zeigen kann, so dass also die radiale Magnetfeldkomponente mit einem Vorzeichen behaftete ist.

Somit gibt es einen umkehrbar eindeutigen Zusammenhang zwischen der radialen Magnetfeldkomponente Hᵣ und der axialen Position z, der für eine Positionsmessung eingesetzt werden kann.

In Figur 2 zeigt die Magnetisierung einer ferromagnetischen Stange mit dem erfindungsgemäßen Verfahren.

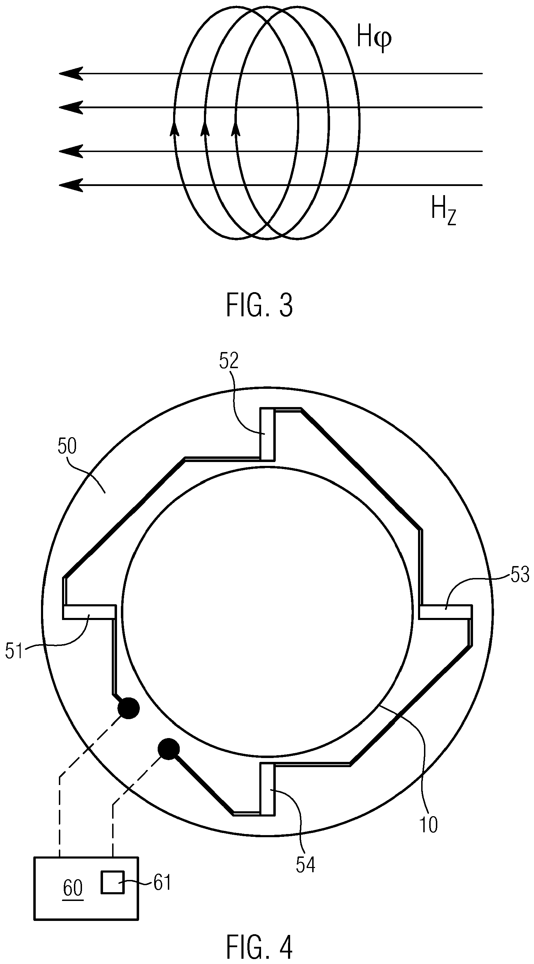

Dabei wird zeitgleich zum einen mit einer Spule 20 um die ferromagnetische Stange 10 ein Magnetfeld in Längsrichtung der Stange (z-Achse) erzeugt und zum anderen durch einen Stromfluss in der Stange 10 in z-Richtung (oder in negativer z-Richtung) ein Magnetfeld in Umfangsrichtung (ϕ-Richtung) erzeugt. Diese Magnetfeldkomponenten H_{z} und H_{ϕ} sind in Figur 3 dargestellt. Der Stromfluss durch die Stange 10 wird über zwei daran angeordnete Kontakte 31, 32 und einer zwischen den Kontakten 31, 32 anliegenden Spannung bewirkt. Aufgrund der Magnetisierung der ferromagnetischen Stange 10 wird dabei auch eine remanente radiale Magnetfeldkomponente (Hᵣ in Figur 1) erzeugt.

Der Stromfluss (bzw. die angelegte Spannung) kann dabei vorzugsweise pulsierend erfolgen. Auf diese Weise kann (kurzfristig) ein sehr hoher Strom mit einem entsprechend hohen Magnetfeld erzeugt werden (die Stärke des axialen Feldes durch die Spule kann dagegen z.B. auch durch die Wicklungszahl eingestellt werden). Die gepulste Magnetisierung von Wellen zur Nutzung in der magnetostriktiven Messtechnik für die Drehmomentmessung ist z.B. in EP 1774271 B1 und EP 1902287 B1 beschrieben. Dieses Verfahren ist unter der Bezeichnung "Puls Current Magnetic Encoding (PCME)" bekannt. Dabei wird eine Außenkontaktierung an zwei voneinander beabstandeten Stellen der Welle zwischen den eine Magnetisierung erfolgen soll vorgenommen und ein Strompuls in axialer Richtung der Welle erzeugt, der durch das dabei entstehende Magnetfeld die Welle in Umfangsrichtung magnetisiert. Die Magnetisierung erfolgt dabei im Wesentlichen in einer oberflächennahen Schicht.

Nach erfolgter Magnetisierung und damit einhergehender Bereitstellung einer radialen Magnetfeldkomponente kann deren Gradient durch einen teilweisen Entmagnetisierungsvorgang reduziert werden. Dazu wird eine Spule (z.B. die Spule 20) um die Stange mit einer Wechselspannung versorgt und optional über den magnetisierten Bereich bewegt.

Figur 4 zeigt eine erfindungsgemäße Vorrichtung zur Positionsmessung. Die beinhaltet eine erfindungsgemäße magnetisierte Stange 10, einen Anordnung von elektrischen Messspulen 51-54 und einen Auswerteeinheit 60 mit einem elektrischen Schwingkreis 61. Die Messspulen sind auf einer Platine 50 angeordnet, die eine kreisförmige Öffnung aufweist, in der sich die Stange 10 befindet. Die Stange 10 und die Platine 50 sind relativ zueinander beweglich vorgesehen. Die Positionsmessung ergibt die absolute Lage zwischen Stange 10 und Platine 50 bzw. den Messspulen 51-54 in Längsrichtung der Stange 10.

Die Messspulen 51-54 sind derart angeordnet, dass der Einfluss des radialen Magnetfeldes in jeder Spule gleichartig ist. Insbesondere sind alle Messspulen 51-54 entweder linkssinnig oder rechtssinnig gewickelt. Die vier Messspulen 51-54 sind in einem Winkelabstand von 90° zueinander in Umfangsrichtung um die Stange 10 auf der Platine angeordnet. Die Verschaltung der Messspulen 51-54 miteinander ist derart, dass eine Verbindungsleitung zwischen zwei der Messspulen 51-54 die radial außen liegende Seite einer Messspule (z.B. 51) mit der innen liegenden Seite einer benachbarten Messspule (z.B. 52) verbindet bzw. umgekehrt. Dies hat insbesondere den Vorteil, dass Einflüsse durch ein äußeres Magnetfeld kompensiert werden, da beispielsweise in den Spulen 51 und 53 die Wirkung des äußeren Magnetfelds entgegengesetzt zueinander ist.

Um eine möglichst große radiale Magnetfeldkomponente nutzen zu können werden die Messspulen 51-54 möglichst nahe an der Oberfläche der Stange 10 (jedoch nicht in Kontakt damit) angeordnet. Der Abstand der Messspulen 51-54 von der Oberfläche der Stange 10 kann beispielsweise kleiner als der Durchmesser der Stange sein, vorzugsweise ist dieser Abstand kleiner als 30% des Durchmessers, höchst vorzugsweise kleiner als 10% des Durchmessers. Weiterhin ist die Ausdehnung der Messspulen (in der erfindungsgemäßen Anordnung in radialer Richtung) klein im Vergleich zum Durchmesser der magnetisierten Stange.

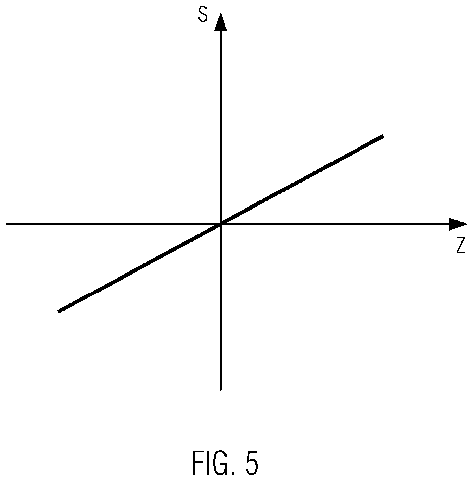

Figur 5 zeigt ein Messsignal der erfindungsgemäßen Vorrichtung. Das Messsignal S ist abhängig von der relativen Position z der Messspulen linear und ergibt somit einen direkten Zusammenhang von gemessenem Signal S zur Position z.

Die dargestellten Ausführungsformen sind lediglich beispielhaft und der vollständige Umfang der vorliegenden Erfindung wird durch die Ansprüche definiert.

## Patentansprüche

1. Magnetisierte Stange (10) mit einem außerhalb der Stange messbaren Magnetfeld,
**dadurch gekennzeichnet, dass**
eine radiale Komponente (Hᵣ) des Magnetfelds der Stange innerhalb eines axialen Bereichs der Stange in Abhängigkeit von der axialen Position (z) einen von Null verschiedenen, konstanten Gradienten aufweist.

2. Magnetisierte Stange nach Anspruch 1, wobei die radiale Magnetfeldkomponente in Abhängigkeit von der Position in Umfangsrichtung um die Stange bei einem konstanten radialen Abstand von der Stange konstant ist.

3. Magnetisierte Stange nach Anspruch 1 oder 2, wobei die Stange eine Vollstange mit einem kreisförmigen Querschnitt oder eine Hohlstange mit einem ringförmigen Querschnitt ist, und wobei die radiale Komponente des Magnetfelds der Stange vorzugsweise die radiale Komponente des Magnetfelds der Stange in einem vorbestimmten radialen Abstand von der Oberfläche der Stange ist, und der vorbestimmte radiale Abstand von der Oberfläche weniger als der Außendurchmesser der Stange ist, vorzugsweise weniger als 30% des Außendurchmessers der Stange, höchst vorzugsweise weniger als 10% des Außendurchmessers der Stange.

4. Vorrichtung zur Positionsmessung, umfassend:
eine magnetisierte Stange (10) nach einem der Ansprüche 1 bis 3; und
wenigstens einen Magnetfeldsensor (51-54) zur Ausgabe eines von der radialen Magnetfeldkomponente abhängenden Signals, wobei der wenigstens eine Magnetfeldsensor und die Stange in axialer Richtung relativ zueinander bewegbar sind.

5. Vorrichtung nach Anspruch 4, weiterhin umfassend eine Auswerteeinrichtung (60) zum Empfangen des ausgegebenen Signals und zum Bestimmen einer relativen axialen Position zwischen dem wenigstens einen Magnetfeldsensor oder eines damit gekoppelten Elements und der magnetisierten Stange unter Verwendung des ausgegebenen Signal.

6. Vorrichtung nach Anspruch 4 oder 5, wobei jeder Magnetfeldsensor eine elektrische Messspule (51-54) umfasst, und wobei der wenigstens eine Magnetfeldsensor in einem elektrischen Schwingkreis verschaltet ist, wobei der elektrischen Schwingkreis insbesondere Teil einer Auswerteeinheit ist.

7. Vorrichtung nach einem der Ansprüche 4 bis 6, wobei eine Anzahl N von Magnetfeldsensoren in einem gleichmäßigen Winkelabstand von 360°/N vorgesehen sind, insbesondere wobei zwei Magnetfeldsensoren in Bezug auf die Achse der magnetisierten Stange gegenüberliegend angeordnet sind oder wobei vier Magnetfeldsensoren in einem jeweiligen Winkelabstand von 90° in Umfangsrichtung der Stange angeordnet sind, wobei vorzugsweise der radiale Abstand der einzelnen Magnetfeldsensoren von der magnetisierten Stange für alle Magnetfeldsensoren gleich ist.

8. Vorrichtung nach Anspruch 7, wobei die Magnetfeldsensoren so miteinander verschaltet sind, dass sich die ausgegebenen Signale aufgrund der jeweils gemessenen radialen Magnetfeldkomponenten addieren.

9. Verwendung einer magnetisierten Stange gemäß einem der Ansprüche 1 bis 3 zur Positionsmessung, wobei wenigstens ein Magnetfeldsensor und die Stange in axialer Richtung relativ zueinander bewegbar sind, wobei von dem wenigstens einen Magnetfeldsensor ein von der radialen Magnetfeldkomponente abhängendes Signal ausgegeben wird und unter Verwendung des ausgegebenen Signals eine relative axiale Position zwischen dem wenigstens einen Magnetfeldsensor oder eines damit gekoppelten Elements und der magnetisierten Stange bestimmt wird.

10. Verfahren zum Magnetisieren einer magnetisierbaren und elektrischen Strom leitenden Stange (10), umfassend die Schritte:
Erzeugen eines elektrischen Stromflusses in einer axialen Richtung der Stange; und
Erzeugen eines Magnetfeldes in axialer Richtung der Stange;
wobei das Erzeugen des Magnetfeldes in axialer Richtung der Stange und das Erzeugen des elektrischen Stromflusses in axialer Richtung der Stange zumindest teilweise gleichzeitig erfolgen;
wodurch eine magnetisierte Stange gemäß einem der Ansprüche 1 bis 3 bereitgestellt wird.

11. Verfahren nach Anspruch 10, wobei das Erzeugen des Magnetfeldes in axialer Richtung der Stange durch eine stromdurchflossene Spule (20), welche die Stange umgibt, bewirkt wird.

12. Verfahren nach Anspruch 10 oder 11, wobei das Erzeugen des elektrischen Stromflusses in axialer Richtung der Stange einen gepulsten Stromfluss umfasst, insbesondere einen mehrfach gepulsten Stromfluss.

13. Verfahren nach einem der Ansprüche 10 bis 12, wobei das Erzeugen des elektrischen Stromflusses in axialer Richtung der Stange das Anlegen einer Spannung zwischen einem ersten Endbereich der Stange und einem zweiten, gegenüberliegenden Endbereich der Stange umfasst.

14. Verfahren nach einem der Ansprüche 10 bis 13, weiterhin umfassend:
teilweises Entmagnetisieren der magnetisierten Stange zum Anpassen eines axialen Gradienten der radialen Magnetfeldkomponente und/oder zum Homogenisieren des Gradienten innerhalb eines axialen Bereichs der Stange.

## Claims

1. A magnetized rod (10) with a magnetic field that can be measured outside the rod,
**characterized in that**
a radial component (Hᵣ) of the magnetic field of the rod within an axial region of the rod has a non-zero constant gradient as a function of the axial position (z).

2. The magnetized rod according to claim 1, wherein the radial magnetic field component is constant with a constant distance from the rod as a function of the position in circumferential direction.

3. The magnetized rod according to claim 1 or 2, wherein the rod is a solid rod having a circular cross-section or a hollow rod having an annular cross-section, and wherein the radial component of the magnetic field of the rod is preferably the radial component of the magnetic field of the rod at a predetermined radial distance from the surface of the rod, and the predetermined radial distance from the surface is smaller than the outer diameter of the rod, preferably smaller than 30 % of the outer diameter of the rod, most preferably smaller than 10 % of the outer diameter of the rod.

4. An apparatus for measuring a position, comprising:
a magnetized rod (10) according to any one of claims 1 to 3; and
at least one magnetic field sensor (51-54) for outputting a signal dependent on the radial magnetic field component, the at least one magnetic field sensor and the rod being movable relative to each other in the axial direction.

5. The apparatus according to claim 4, further comprising an evaluating means (60) for receiving the output signal and determining a relative axial position between the at least one magnetic field sensor or an element coupled thereto and the magnetized rod using the output signal.

6. The apparatus according to claim 4 or 5, wherein each magnetic field sensor comprises an electric measuring coil (51-54), and wherein the at least one magnetic field sensor is connected in an electric oscillating circuit, wherein, in particular, the electric oscillating circuit is part of an evaluation unit.

7. The apparatus according to any one of claims 4 to 6, wherein a number N of magnetic field sensors are provided at a uniform angular distance of 360°/N, in particular wherein two magnetic field sensors are arranged opposite to each other with respect to the axis of the magnetized rod or wherein four magnetic field sensors are arranged at a respective angular distance of 90° in the circumferential direction of the rod, preferably wherein the radial distance of the individual magnetic field sensors from the magnetized rod is the same for all magnetic field sensors.

8. The apparatus of claim 7, wherein the magnetic field sensors are interconnected such that the output signals based on the respective measured radial magnetic field components accumulate.

9. Use of a magnetized rod according to any one of claims 1 to 3 for position measurement, wherein at least one magnetic field sensor and the rod are movable relative to each other in the axial direction, wherein a signal dependent on the radial magnetic field component is output from the at least one magnetic field sensor and a relative axial position between the at least one magnetic field sensor or an element coupled thereto and the magnetized rod is determined using the output signal.

10. A method for magnetizing a magnetizable and electroconductive rod (10) comprising the following steps:
generating an electric current flow in an axial direction of the rod; and
generating a magnetic field in the axial direction of the rod;
wherein the generation of the magnetic field in the axial direction of the rod and the generation of the electric current flow in the axial direction of the rod occur at least partially simultaneously;
whereby a magnetized rod according to any one of claims 1 to 3 is provided.

11. The method according to claim 10, wherein generating the magnetic field in the axial direction of the rod is effected by a current-carrying coil (20) surrounding the rod.

12. The method according to claim 10 or 11, wherein generating the electric current flow in the axial direction of the rod comprises a pulsed current flow, in particular a multiple-pulse current flow.

13. The method according to any one of claims 10 to 12, wherein generating the electrical current flow in the axial direction of the rod comprises applying a voltage between a first end region of the rod and a second, opposite end region of the rod.

14. The method according to any one of claims 10 to 13, further comprising:
partially demagnetizing the magnetized rod to adjust an axial gradient of the radial magnetic field component and/or to homogenize the gradient within an axial region of the rod.

## Revendications

1. Barreau magnétisé (10) avec un champ magnétique pouvant être mesuré à l'extérieur du barreau,
**caractérisé en ce que**
une composante radiale (Hᵣ) du champ magnétique du barreau présente un gradient constant différent de zéro dans une région axiale du barreau en fonction de la position axiale (z).

2. Barreau magnétisé selon la revendication 1, dans lequel la composante radiale de champ magnétique est constante à une distance radiale constante du barreau dans la direction circonférentielle autour du barreau en fonction de la position.

3. Barreau magnétisé selon la revendication 1 ou 2, dans lequel le barreau est un barreau plein avec une section transversale circulaire ou un barreau creux avec une section transversale annulaire, et dans lequel la composante radiale du champ magnétique du barreau est de manière préférée la composante radiale du champ magnétique du barreau à une distance radiale prédéterminée de la surface du barreau, et la distance radiale prédéterminée de la surface du barreau est inférieure au diamètre extérieur du barreau, de manière préférée inférieure à 30 % du diamètre extérieur du barreau, de manière particulièrement préférée inférieure à 10 % du diamètre extérieur du barreau.

4. Dispositif de mesure de position, comprenant :
un barreau magnétisé (10) selon l'une quelconque des revendications 1 à 3 ; et
au moins un capteur de champ magnétique (51 à 54) permettant d'émettre un signal dépendant de la composante radiale de champ magnétique, dans lequel le au moins un capteur de champ magnétique et le barreau sont mobiles l'un par rapport à l'autre dans la direction axiale.

5. Dispositif selon la revendication 4, comprenant en outre un moyen d'évaluation (60) permettant de recevoir le signal émis et de déterminer une position axiale relative entre le au moins un capteur de champ magnétique ou un élément couplé à celui-ci et le barreau magnétisé en utilisant le signal émis.

6. Dispositif selon la revendication 4 ou 5, dans lequel chaque capteur de champ magnétique comprend une bobine de mesure électrique (51 à 54), et dans lequel le au moins un capteur de champ magnétique est connecté au sein d'un circuit électrique oscillant, dans lequel le circuit électrique oscillant fait en particulier partie d'une unité d'évaluation.

7. Dispositif selon l'une quelconque des revendications 4 à 6, dans lequel un nombre N de capteurs de champ magnétique est fourni avec un écart angulaire régulier de 360°/N, en particulier dans lequel deux capteurs de champ magnétique sont agencés vis-à-vis l'un de l'autre par rapport à l'axe du barreau magnétisé ou dans lequel quatre capteurs de champ magnétique sont agencés avec un écart angulaire respectif de 90° dans la direction circonférentielle du barreau, dans lequel la distance radiale entre les capteurs de champ magnétique individuels et le barreau magnétisé est de manière préférée la même pour tous les capteurs de champ magnétique.

8. Dispositif selon la revendication 7, dans lequel les capteurs de champ magnétique sont connectés les uns aux autres de sorte que les signaux émis s'additionnent en se basant sur les composantes radiales de champ magnétique respectivement mesurées.

9. Utilisation d'un barreau magnétisé selon l'une quelconque des revendications 1 à 3 en vue d'une mesure de position, dans laquelle au moins un capteur de champ magnétique et le barreau sont mobiles l'un par rapport à l'autre dans la direction axiale, dans laquelle un signal dépendant de la composante radiale de champ magnétique est émis par le au moins un capteur de champ magnétique et une position axiale relative entre le au moins un capteur de champ magnétique ou un élément couplé à celui-ci et le barreau magnétisé est déterminée en utilisant le signal émis.

10. Procédé de magnétisation d'un barreau (10) électriquement conducteur et pouvant être magnétisé, comprenant les étapes consistant à :
générer un flux de courant électrique dans une direction axiale du barreau ; et
générer un champ magnétique dans la direction axiale du barreau ;
dans lequel la génération du champ magnétique dans la direction axiale du barreau et la génération du flux de courant électrique dans la direction axiale du barreau interviennent de manière au moins partiellement simultanée ;
ce qui permet de fournir un barreau magnétisé selon l'une quelconque des revendications 1 à 3.

11. Procédé selon la revendication 10, dans lequel la génération du champ magnétique dans la direction axiale du barreau est provoquée grâce à une bobine (20) parcourue par un courant électrique et entourant le barreau.

12. Procédé selon la revendication 10 ou 11, dans lequel la génération du flux de courant électrique dans la direction axiale du barreau comprend un flux de courant à impulsions, en particulier un flux de courant à impulsions multiples.

13. Procédé selon l'une quelconque des revendications 10 à 12, dans lequel la génération du flux de courant électrique dans la direction axiale du barreau comprend l'application d'une tension entre une première région d'extrémité du barreau et une seconde région d'extrémité opposée du barreau.

14. Procédé selon l'une quelconque des revendications 10 à 13, comprenant en outre une étape consistant à :
démagnétiser partiellement le barreau magnétisé afin d'ajuster un gradient axial de la composante radiale de champ magnétique et/ou afin d'homogénéiser le gradient au sein d'une région axiale du barreau.
